# EUROPÄISCHE PATENTSCHRIFT

(11) **EP 2 201 786 B1**
(45) Veröffentlichungstag und Bekanntmachung des Hinweises auf die Patenterteilung: **09.11.2011**
(21) Anmeldenummer: 08841393.5
(22) Anmeldetag: 15.09.2008
(51) Int. Cl.: H04Q 1/14

(54) **VERTEILEREINRICHTUNG EINER TELEKOMMUNIKATIONSANLAGE SOWIE STECKER FÜR EINE VERTEILEREINRICHTUNG EINER TELEKOMMUNIKATIONSANLAGE**
DISTRIBUTION DEVICE OF A TELECOMMUNICATIONS SYSTEM AND PLUG FOR A DISTRIBUTION DEVICE OF A TELECOMMUNICATIONS SYSTEM
DISPOSITIF RÉPARTITEUR D'UNE INSTALLATION DE TÉLÉCOMMUNICATION, ET CONNECTEUR POUR UN DISPOSITIF RÉPARTITEUR D'UNE INSTALLATION DE TÉLÉCOMMUNICATION

(30) Priorität: 18.10.2007 DE 202007014702 U
(43) Veröffentlichungstag der Anmeldung: 30.06.2010
(73) Patentinhaber: CCS Technology Inc., Wilmington, DE 19803 (US)
(72) Erfinder: LIPKOWSKI, Marc, 58640 Iserlohn (DE)
(74) Vertreter: Sturm, Christoph
(86) Internationale Anmeldenummer: PCT/EP2008/007652
(87) Internationale Veröffentlichungsnummer: WO 2009/052909

(56) Entgegenhaltungen:
- WO-A-01/97532
- DE-A1- 19 536 224
- DE-A1-102004 032 206

## Beschreibung

Die Erfindung betrifft eine Verteilereinrichtung einer Telekommunikationsanlage gemäß dem Oberbegriff des Anspruchs 1. Des Weiteren betrifft die Erfindung einen Stecker für eine Verteilereinrichtung einer Telekommunikationsanlage gemäß dem Oberbegriff des Anspruchs 8.

Die DE 100 29 870 A1 offenbart eine als Verteilerblock ausgebildete Verteilereinrichtung einer Telekommunikationsanlage mit einer als Aufnahmewanne ausgebildeten Aufnahmeeinrichtung, in der sandwichartig übereinander mehrere Funktionselemente sowie Drahtführungselemente positioniert sind. Die Funktionselemente verfügen über Kontaktfedern mehrerer Teilnehmer, die an einer Vorderseite des jeweiligen Funktionselements als IDC-Kontakte ausgebildete Anschlusselemente für den Anschluss ankommender bzw. abgehender Kabeladern bereitstellen. Die Drahtführungselemente weisen Drahtführungsebenen bildende Drahtführungskanäle zur Führung der Kabeladern auf.

Die Kontaktfedern eines jeden Teilnehmer bilden an der Vorderseite des jeweiligen Funktionselements in Form von IDC-Kontakten DSLAM Kontakte, an die der Übertragung hochfrequenter Rechnerdatensignale dienende DSLAM Datensignalleitungen anschließbar sind, VOICE Kontakte, an die der Übertragung niederfrequenter Sprachdatensignale dienende VOICE Datensignalleitungen anschließbar sind, und LINE Kontake, an die der Übertragung kombinierter Sprachdaten-/Rechnerdatensignale dienende LINE Datensignalleitungen anschließbar sind, aus.

Nach der DE 100 29 870 A1 sind in die Verteilereinrichtung xDSL-Splittereinrichtungen integriert, die an einer Rückseite in die Funktionselemente einsteckbar sind, um über die ankommenden bzw. abgehenden Kabeladern zu leitende, niederfrequente Sprachdatensignale und hochfrequente Rechnerdatensignale zusammenzuführen bzw. voneinander zu trennen.

Hierzu ist mit den Kontaktfedern jedes Teilnehmers jeweils eine xDSL-Splittereinrichtung derart kontaktiert, sodass die Kontaktfedern, welche die DSLAM Kontakte bereitstellen, mit DSLAM Ports der xDSL-Splittereinrichtung des jeweiligen Teilnehmers, die Kontaktfedern, welche die VOICE Kontakte bereitstellen, mit VOICE Ports der xDSL-Splittereinrichtung des jeweiligen Teilnehmers, und die Kontaktfedern, welche die LINE Kontakte bereitstellen, mit LINE Ports der xDSL-Splittereinrichtung des jeweiligen Teilnehmers elektrisch leitend verbunden sind.

Die Datensignalleitungen, insbesondere die LINE Datensignalleitungen neigen dazu, an Kontakten bzw. Verbindungsstellen zu oxydieren bzw. anzulaufen. Eine sich hierbei ausbildende Oxydschicht kann die Übertragung behindern, weil die Datensignalleitungen hochohmiger werden. Aus diesem Grund ist es üblich, einen Gleichstrom bzw. einen Frittstrom insbesondere über die LINE Datensignalleitungen fließen zu lassen, der das Anlaufen von Kontakten bzw. Verbindungsstellen verhindert. Bei der aus der DE 100 29 870 A1 bekannten Verteilereinrichtung kann ein solcher Frittstrom über die niederfrequenten Sprachdatensignale bereitgestellt werden. Da der Frittstrom in diesem Fall entweder durch Batterien oder durch eine VOICE Linecard selbst eingespeist wird, befindet sich dann in jedem Fall ein Frittstrom auf der zu einem Kunden bzw. Teilnehmer führenden LINE Datenleitung, da die vorhandene xDSL-Splittereinrichtung im niederfrequenten Signalpfad galvanisch leitend ist.

Zur Prüfung eines Teilnehmeranschlusses werden bei Bedarf niederfrequente Prüfsignale, sogenannte TAM (Test-Access-Matrix) Signale, auf die LINE Datensignalleitung gegeben. Bei xDSL Diensten kann dieses auf Grund der xDSL-Splittereinrichtung nur über den niederfrequenten Signalpfad derselben, die von einem VOICE Port zu einem LINE Port der xDSL-Splittereinrichtung führt, erfolgen.

Heute werden zunehmend IP-basierte Kommunikationsdienste angeboten, die ohne herkömmlichen Telefonanschluss zur Sprachübertragung und damit ohne VOICE Datensignalleitungen auskommen. In diesem Falle spricht man von VOICE OVER IP oder DSL PUR, wobei das niederfrequente Sprachdatensignal als Teil des hochfrequenten Rechnerdatensignals übertragen wird. Es existiert dann kein separates niederfrequentes Sprachband mehr. Eine Einspeisung von Frittstrom kann dann rein theoretisch über den DSLAM erfolgen.

Da IP-basierte Kommunikationsdienste ohne Verwendung von VOICE Datensignalleitungen von den gleichen DSLAM's bereitgestellt werden wie herkömmliche xDSL Datendienste unter Verwendung von VOICE Datensignalleitungen, soll, um Kosten zu sparen, auf eine bereits installierte Infrastruktur zurückgegriffen werden. Dabei kann es vorkommen, dass einzelne Teilnehmer auf VOICE OVER IP oder DSL PUR umgestellt sind, andere Teilnehmer hingegen weiterhin beim altbekannten xDSL Service mit separatem Telefonanschluss bleiben.

Dies würde hinsichtlich des notwendigen Frittstromes und der notwendigen Durchleitung von niederfrequenten Prüfsignalen die Teilnehmer quasi in zwei Gruppen aufteilen, nämlich in Teilnehmer, die auf VOICE OVER IP oder DSL PUR umgestellt worden sind und für die der Frittstrom über den DSLAM eingespeist wird, da die angeschlossene VOICE Linecard abgeschaltet ist, und in Teilnehmer, die beim bisherigen xDSL Service verbleiben und für die der Frittstrom weiterhin von der VOICE Linecard oder von Batterien bereitgestellt wird. Dabei besteht für die Teilnehmer, die auf VOICE OVER IP oder DSL PUR umgestellt worden sind, das Problem, dass ein vom DSLAM bereitgestellter Frittstrom durch die im hochfrequenten Signalpfad der xDSL-Splittereinrichtung befindlichen Kondensatoren blockiert wird. Ebenso werden die Prüfsignale durch diese Kondensatoren blockiert.

Es besteht daher ein Bedarf einer Verteilereinrichtung einer Telekommunikationsanlage, die dann, wenn dieselbe sowohl VOICE OVER IP Teilnehmer ohne Verwendung separater VOICE Datensignalleitungen als auch konventionelle xDSL Teilnehmer mit Verwendung separater VOICE Datensignalleitungen bedient, für alle Teilnehmer trotz vorhandener xDSL-Splittereinrichtung eine Einspeisung von Frittstrom und Prüfsignalen erlaubt.

Hiervon ausgehend liegt der vorliegenden Erfindung das Problem zu Grunde, eine neuartige Verteilereinrichtung einer Telekommunikationsanlage zu schaffen.

Dieses Problem wird durch eine Verteilereinrichtung mit den Merkmalen des Anspruchs 1 gelöst.

Erfindungsgemäß umfasst die Verteilereinrichtung mindestens einen zwischen die Kontaktfedern eines Teilnehmers einführbaren Stecker, der dann, wenn derselbe zwischen die Kontaktfedern eines Teilnehmers eingeführt ist, die VOICE Kontakte der Kontaktfedern des Teilnehmers von den VOICE Ports der jeweiligen xDSL-Splittereinrichtung trennt und die DSLAM Kontakte der Kontaktfedern des Teilnehmers mit den VOICE Ports der jeweiligen xDSL-Splittereinrichtung unter Zwischenschaltung einer in den Stecker integrierten integrierten und als Tiefpassfilter wirkenden Kompensationseinrichtung, die für Signale mit einer Frequenz oberhalb einer Grenzfrequenz sperrt bzw. undurchlässig ist, elektrisch leitend verbindet. Die erfindungsgemäße Verteilereinrichtung einer Telekommunikationsanlage umfasst mindestens einen Stecker, der dann, wenn ein Teilnehmer auf VOICE OVER IP oder DSL PUR umgestellt ist, zwischen die Kontaktfedern des jeweiligen Teilnehmers eingeführt ist, wobei dann der Stecker die VOICE Kontakte der Kontaktfedern des jeweiligen Teilnehmers von den VOICE Ports der jeweiligen xDSL-Splittereinrichtung trennt und die DSLAM Kontakte der Kontaktfedern des jeweiligen Teilnehmers mit den VOICE Ports der jeweiligen xDSL-Splittereinrichtung unter Zwischenschaltung einer in den Stecker integrierten Kompensationseinrichtung elektrisch leitend verbindet Für auf VOICE OVER IP oder DSL PUR umgestellte Teilnehmer wird demnach über den Stecker der niederfrequente Signalpfad der xDSL-Splittereinrichtung des Teilnehmers parallel zum hochfrequenten Signalpfad desselben geschaltet, so dass ein über den DSLAM eingespeister Frittstrom sowie über den DSLAM eingespeiste TAM Prüfsignale über den niederfrequenten Signalpfad der xDSL-Splittereinrichtung auf die LINE Datensignalleitungen gelangen können. Der Frittstrom sowie die TAM Prüfsignale können so den hochfrequenten Signalpfad der jeweiligen xDSL-Splittereinrichtung umgehen. Für Teilnehmer, die nicht auf VOICE OVER IP oder DSL PUR umgestellt sind, sondern vielmehr einen konventionellen xDSL Dienst unter Verwendung von VOICE Datensignalleitungen verwenden, ist der Stecker nicht zwischen die Kontaktfedern des jeweiligen Teilnehmers gesteckt, so dass hinsichtlich dieser Teilnehmer keine unterschiede zum Stand der Technik bestehen.

Der erfindungsgemäße Stecker ist in Anspruch 7 definiert.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine perspektivische Ansicht einer als Verteilerblock ausgebildeten, mehrere Funktionselemente umfassenden erfindungsgemäßen Verteilereinrichtung;
- Fig. 2: den Stecker der erfindungsgemäßen Verteilereinrichtung der Fig. 1 in perspektivischer Alleindarstellung;
- Fig. 3: ein Ersatzschaltbild der Verteilereinrichtung mit den Kontaktfedern und der xDSL-Splittereinrichtung eines Teilnehmers bei zwischen die Kontaktfedern des Teilnehmers eingeführtem Stecker; und
- Fig. 4:: ein Ersatzschaltbild der Verteilereinrichtung mit den Kontaktfedern und der xDSL-Splittereinrichtung eines Teilnehmers bei zwischen den Kontaktfedern des Teilnehmers entferntem Stecker.

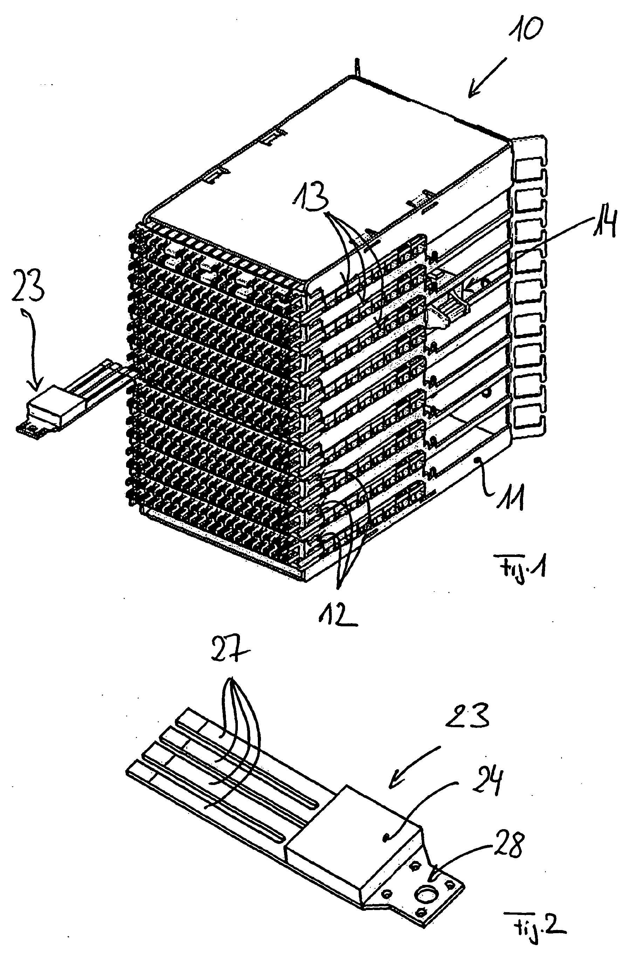

Fig. 1 zeigt eine als Verteilerblock ausgebildete, erfindungsgemäße Verteilereinrichtung 10 einer Telekommunikationsanlage in perspektivischer Vorderansicht, wobei die Verteilereinrichtung 10 der Fig. 1 eine als Aufnahmewanne ausgebildete Aufnahmeeinrichtung 11 umfasst.

Die als Aufnahmewanne ausgebildete Aufnahmeeinrichtung 11 ist an einer Vorderseite offen ausgebildet, so dass von der Vorderseite aus einerseits Funktionselemente 12 und andererseits Drahtführungselemente 13 in der Aufnahmeeinrichtung 11 angeordnet werden können. Die Funktionselemente 12 sowie Drahtführungselemente 13 werden dabei von der Vorderseite her in die Aufnahmeeinrichtung 11 eingeschoben. Die Funktionselemente 12 verfügen über Kontaktfedern mehrerer Teilnehmer, die an der Vorderseite derselben als IDC-Kontakte ausgebildete Anschlusselemente zum Anschluss von Datensignalleitungen bilden.

Neben den Funktionselementen 12 und den Drahtführungselementen 13 finden in der Aufnahmeeinrichtung weiterhin xDSL-Splittereinrichtungen 14 Aufnahme, die mit den Funktionselementen 12 zusammenwirken und mit denselben elektrisch leitend kontaktiert sind.

Die xDSL-Splittereinrichtungen 14 können integraler Bestandteil der Funktionselemente 12 oder mit diesen über Steckverbindungen verbunden sein. Im gezeigten Ausführungsbeispiel ist eine xDSL-Splittereinrichtung 14 ausgehend von einer Rückseite mit einem Funktionselement 12 bzw. den Kontaktfedern desselben kontaktiert.

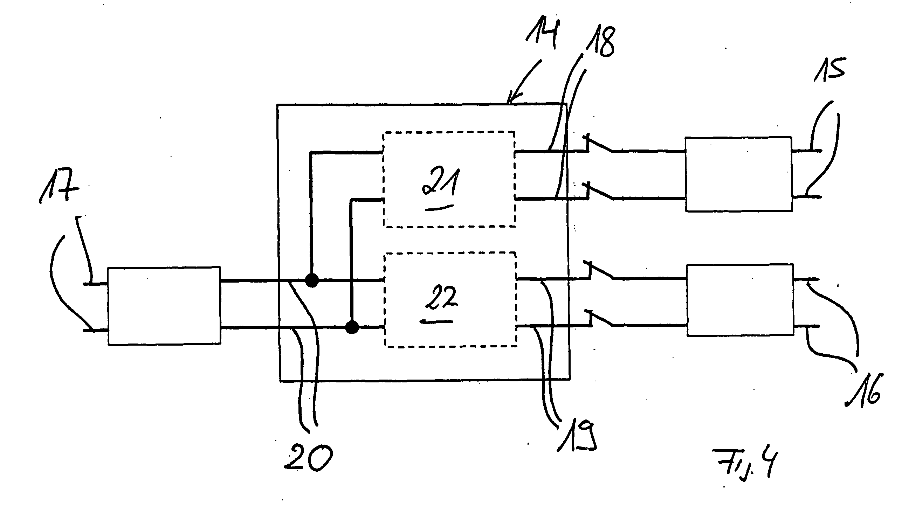

Fig. 4 zeigt ein Ersatzschaltbild der einem Teilnehmer zugeordneten Kontaktfedern eines Funktionselements 12 sowie einer dem Teilnehmer zugeordneten xDSL-Splittereinrichtung 14, wobei die Kontaktfedern eines Teilnehmers an der Vorderseite eines Funktionselements 12 DSLAM Kontakte 15, VOICE Kontakte 16 und LINE Kontakte 17, die jeweils vorzugsweise als IDC-Kontakte ausgeführt sind, bereitstellen. An die als IDC-Kontakte ausgebildeten DSLAM Kontakte 15 der Kontaktfedern eines Teilnehmers sind DSLAM Datensignalleitungen anschließbar, wobei die DSLAM Datensignalleitungen bei einem Teilnehmer, der einen konventionellen xDSL Dienst verwendet, ausschließlich hochfrequente Rechnerdatensignale übertragen. An die VOICE Kontakte 16 eines Teilnehmers sind VOICE Datensignalleitungen übertragbar, die bei einem Teilnehmer, der einen konventionellen xDSL Datendienst verwendet, niederfrequente Sprachdatensignale übertragen. An die LINE Kontakte 17 des Teilnehmers sind LINE Datensignalleitungen anschließbar, die kombinierte Sprachdaten-Rechnerdatensignale übertragen.

Gemäß Fig. 4 sind bei einem Teilnehmer, der einen konventionellen xDSL Datendienst benutzt, die Kontaktfedern, welche die DSLAM Kontakte 15 bereitstellen, mit DSLAM Ports 18 der xDSL-Splittereinrichtung 14 elektrisch leitend kontaktiert. Ferner sind die Kontaktfedern, welche die VOICE Kontakte 16 bereitstellen, mit VOICE Ports 19 der xDSL-Splittereinrichtung 14 elektrisch leitend kontaktiert. Ferner sind gemäß Fig. 4 die Kontaktfedern, welche die LINE Kontakte 17 bereitstellen, mit LINE Ports 20 der xDSL-Splittereinrichtung 14 elektrisch leitend kontaktiert.

Ein sich zwischen den DSLAM Ports 18 und den LINE Ports 20 erstreckender Signalpfad der xDSL-Splittereinrichtung 14 ist als hochfrequenter Signalpfad ausgeführt, wohingegen ein sich zwischen den VOICE Ports 19 und den LINE Ports 20 erstreckender Signalpfad der xDSL-Splittereinrichtung 14 als niederfrequenter Signalpfad ausgeführt ist. In den hochfrequenten Signalpfad ist mindestens eine elektrische bzw. elektronische Baugruppe 21 und in den niederfrequenten Signalpfad ist mindestens eine elektrische bzw. elektronische Baugruppe 22 integriert, mit Hilfe derer einerseits kombinierte Sprachdaten-Rechnerdatensignale in separate Sprachdatensignale und Rechnerdatensignale aufgetrennt und andererseits separate Sprachdatensignale und Rechnerdatensignale in kombinierte Sprachdaten-/Rechnerdatensignale zusammengeführt werden können.

Fig. 4 zeigt demnach ein Ersatzschaltbild der Baugruppen der Verteilereinrichtung 10, die einem Teilnehmer zugeordnet sind, der einen konventionellen xDSL Dienst unter Verwendung separater VOICE Datensignalleitungen nutzt. Bei einem solchen Teilnehmer werden über die an die DSLAM Kontakte 15 angeschlossenen DSLAM Datensignalleitungen ausschließlich hochfrequente Rechnerdatensignale übertragen. Über die an die VOICE Kontakte 16 angeschlossenen VOICE Datensignalleitungen werden in diesem Fall ausschließlich niederfrequente Sprachdatensignale übertragen. Weiterhin können über die VOICE Datensignalleitungen ein Frittstrom sowie Prüfsignale angelegt bzw. eingespeist werden.

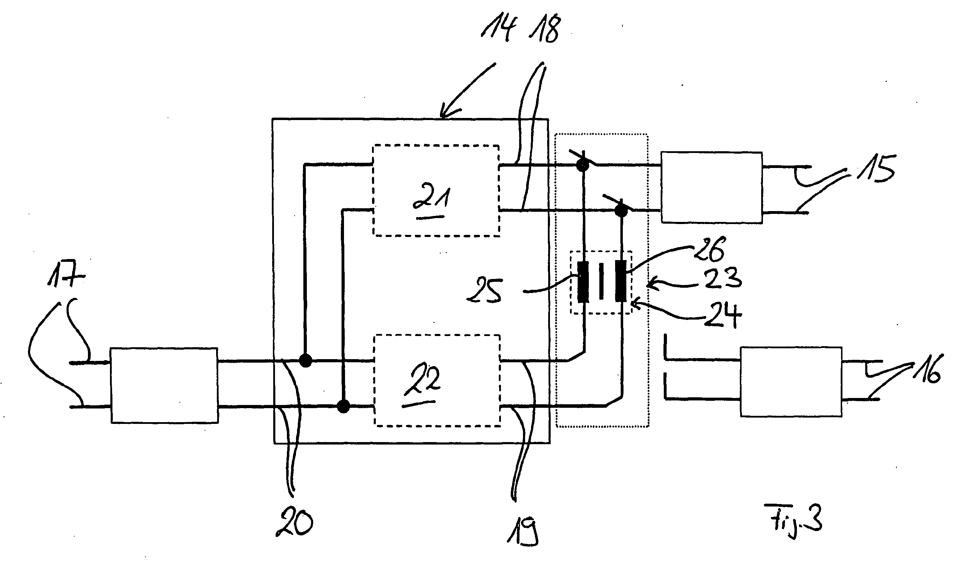

Gemäß Fig. 1 umfasst die erfindungsgemäße Verteilereinrichtung 10 mindestens einen Stecker 23, der zwischen die Kontaktfedern eines Teilnehmers eingeführt werden kann, nämlich dann, wenn ein Teilnehmer, der bislang einen konventionellen xDSL Dienst nutzt, auf einen VOICE OVER IP bzw. DSL PUR Dienst umgestellt werden soll. Gemäß Fig. 1 ist der Stecker 23 ausgehend von einer Vorderseite der Verteilereinrichtung 10 bzw. eines Funktionselements 12 zwischen Kontaktfedern eines Teilnehmers einführbar, wobei Fig. 3 ein Ersatzschaltbild der einem Teilnehmer zugeordneten Baugruppen der Verteilereinrichtung 10 für den Fall zeigt, für welchen für den Teilnehmer der Stecker 23 zwischen die Kontaktfedern desselben eingeschoben ist.

Wie Fig. 3 entnommen werden kann, sind dann, wenn der Stecker 23 zwischen die Kontaktfedern eines Teilnehmers eingeführt ist, die VOICE Kontakte 16 der Kontaktfedern des Teilnehmers von den VOICE Ports 19 der xDSL-Splittereinrichtung 14 des Teilnehmers getrennt, die DSLAM Kontakte 15 der Kontaktfedern des Teilnehmers sind hingegen elektrisch leitend mit den VOICE Ports 19 der xDSL-Splittereinrichtung 14 verbunden, und zwar unter Zwischenschaltung einer in den Stecker 23 integrierten Kompensationseinrichtung 24.

In diesem Fall ist dann der niederfrequente Signalpfad der xDSL-Splittereinrichtung 14 parallel zum hochfrequenten Signalpfad derselben geschaltet, so dass demnach Signale, die von den an die DSLAM Kontakte 15 angeschlossenen DSLAM Datensignalleitungen übertragen werden, entweder über den hochfrequenten Signalpfad oder den niederfrequenten Signalpfad der xDSL-Splittereinrichtung 14 an den LINE Kontakten 17 und damit an den an den LINE Kontakten 17 angreifenden LINE Datensignalleitungen bereitgestellt werden.

Für einen Teilnehmer, der im Sinne der Fig. 3 auf VOICE OVER IP oder DSL PUR umgestellt ist, werden niederfrequente Sprachdatensignale als Teil der hochfrequenten Rechnerdatensignale über den hochfrequenten Signalpfad übertragen. Ein niederfrequentes Sprachdatensignal ist dabei in ein hochfrequentes Rechnerdatensignal eingebettet, sodass kein separates, niederfrequentes Sprachdatensignal besteht. Ein bereitgestellter Frittstrom sowie bereitgestellte TAM Prüfsignale werden hingegen über den niederfrequenten Signalpfad der xDSL-Splittereinrichtung 14 übertragen.

Gemäß Fig. 3 schaltet die Kompensationseinrichtung 24 zwischen jeden DSLAM Kontakt 15 der Kontaktfedern des entsprechenden Teilnehmers und jeden VOICE Port 19 der entsprechenden xDSL-Splittereinrichtung 14 eine Induktivität 25 bzw. 26, wobei im gezeigten Ausführungsbeispiel die beiden Induktivitäten 25, 26 magnetisch gekoppelt sind. Die Kompensationseinrichtung 24 wirkt wie ein Tiefpassfilter und ist für Signale oberhalb einer definierten Grenzfrequenz undurchlässig. Signale mit einer Frequenz oberhalb dieser Grenzfrequenz können demnach die Kompensationseinrichtung 24 nicht passieren. Die Grenzfrequenz ist vom genutzten xDSL Dienst (z.B. ASDL; VDSL) abhängig und liegt insbesondere zwischen 80 und 120 kHz.

Da zwischen den VOICE Ports 19 durch die oder jede Baugruppe 22 der xDSL-Splittereinrichtung 14 eine kapazitive Last vorhanden ist, würde das hochfrequente Rechnerdatensignal ohne die Kompensationseinrichtung 24 an den DSLAM Ports 18 bzw. den DSLAM Kontakten 15 gestört bzw. gedämpft, wodurch eine Übertragung des hochfrequenten Rechnerdatensignals unmöglich oder nur mit sehr verringerter Reichweite oder hoher Instabilität möglich wäre.

Im gezeigten Ausführungsbeispiel umfasst ein solcher Stecker 23 mehrere Kontaktzunge 27, mit welchen derselben ausgehend von der Vorderseite eines Funktionselements 12 zwischen die Kontaktfedern eines Teilnehmers eingeführt werden kann. Über die Kontaktzungen 27 kann der Stecker 23 auf die oben beschriebene Art und Weise mit den Kontaktfedern eines Teilnehmers kontaktiert werden, um dann, wenn derselbe zwischen die Kontaktfedern eines Teilnehmers eingesteckt ist, für den Teilnehmer einen VOICE OVER IP oder DSL PUR-Betrieb mit der Möglichkeit der Einspeisung eines Frittstroms und der Einspeisung von TAM Prüfsignalen zu ermöglichen.

In einem hinteren Abschnitt der Kontaktzungen 27 ist die Kompensationseinrichtung 24 angeordnet. In einem Abschnitt 28 des Steckers 23 können zu Testzwecken Signale abgegriffen werden.

Die erfindungsgemäße Verteilereinrichtung verfügt über eine Vielzahl von Vorteilen. So können in der erfindungsgemäßen Verteilereinrichtung sowohl Teilnehmer, die einen VOICE OVER IP Betrieb verwenden, als auch Teilnehmer, die einen konventionellen xDSL Dienst verwenden, gehandhabt werden, wobei für beide Teilnehmer ein Frittstrom sowie Prüfsignale eingespeist werden können.

Zwischen den Betriebsarten kann ohne Rangieraufwand durch Einstecken des Steckers oder Herausziehen desselben umgeschaltet werden. Eine bereits im Feld installierte Infrastruktur kann genutzt werden. Die in den Stecker integrierte Kompensationseinrichtung sorgt für eine geringe Einfügedämpfung, hohe Reflektionsdämpfung sowie für eine Unabhängigkeit von in der Verteilereinrichtung eingesetzten Splittereinrichtungen. Die Kompensationseinrichtung stellt eine definiert hohe Impedanz gegenüber hochfrequenten Signalen bereit.

### Bezugszeichenliste

- 10: Verteilereinrichtung
- 11: Aufnahmeeinrichtung
- 12: Funktionselement
- 13: Drahtführungselement
- 14: xDSL-Splittereinrichtung
- 15: DSLAM Kontakt
- 16: VOICE Kontakt
- 17: LINE Kontakt
- 18: DSLAM Port
- 19: VOICE Port
- 20: LINE Port
- 21: Baugruppe
- 22: Baugruppe
- 23: Stecker
- 24: Kompensationseinrichtung
- 25: Induktivität
- 26: Induktivität
- 27: Kontaktzunge
- 28: Abschnitt

## Patentansprüche

1. Verteilereinrichtung einer Telekommunikationsanlage, mit mindestens einem Funktionselement, wobei jedes Funktionselement für mehrere Teilnehmer jeweils mehrere Kontaktfedern aufweist, die an einer Vorderseite des jeweiligen Funktionselements als IDC-Kontakte ausgebildete Anschlusselemente ausbilden, wobei die Kontaktfedern für jeden Teilnehmer zumindest DSLAM Kontakte, an die der Übertragung hochfrequenter Rechnerdaten-Signale dienende DSLAM Datensignalleitungen anschließbar sind, und VOICE Kontakte, an die der Übertragung niederfrequenter Sprachdaten-Signale dienende VOICE Datensignalleitungen anschließbar sind, und LINE Kontake, an die der Übertragung kombinierter Sprachdaten-/Rechnerdaten-Signale dienende LINE Datensignalleitungen anschließbar sind, ausbilden, wobei mit den Kontaktfedern jedes Teilnehmers jeweils eine xDSL-Splittereinrichtung kontaktiert ist, sodass die Kontaktfedern, welche die DSLAM Kontakte bereitstellen, mit DSLAM Ports der xDSL-Splittereinrichtung des jeweiligen Teilnehmers, die Kontaktfedern, welche die VOICE Kontakte bereitstellen, mit VOICE Ports der xDSL-Splittereinrichtung des jeweiligen Teilnehmers und die Kontaktfedern, welche die LINE Kontakte bereitstellen, mit LINE Ports der xDSL-Splittereinrichtung des jeweiligen Teilnehmers elektrisch leitend verbunden sind, sodass einerseits kombinierte Sprachdaten-/Rechnerdaten-Signale in Sprachdaten-Signale und Rechnerdaten-Signale auftrennbar und andererseits Sprachdaten-Signale und Rechnerdaten-Signale zu einem kombinierten Sprachdaten-/Rechnerdaten-Signal zusammenführbar sind, **gekennzeichnet durch** mindestens einen zwischen die Kontaktfedern eines Teilnehmers einführbaren Stecker (23), der dann, wenn derselbe zwischen die Kontaktfedern eines Teilnehmers eingeführt ist, die VOICE Kontakte (16) der Kontaktfedern des Teilnehmers von den VOICE Ports (19) der jeweiligen xDSL-Splittereinrichtung (14) trennt und die DSLAM Kontakte (15) der Kontaktfedern des Teilnehmers mit den VOICE Ports (19) der jeweiligen xDSL-Splittereinrichtung unter Zwischenschaltung einer in den Stecker (23) integrierten und als Tiefpassfilter wirkenden Kompensationseinrichtung (24), die für Signale mit einer Frequenz oberhalb einer Grenzfrequenz sperrt bzw. undurchlässig ist, elektrisch leitend verbindet.

2. Verteilereinrichtung nach Anspruch 1, **dadurch gekennzeichnet, dass** die Kompensationseinrichtung (24) mindestens zwei Induktivitäten (25, 26) umfasst.

3. Verteilereinrichtung nach Anspruch 1 oder 2, **dadurch gekennzeichnet, dass** die Kompensationseinrichtung (24) mindestens zwei magnetisch gekoppelte Induktivitäten (25, 26) umfasst.

4. Verteilereinrichtung nach einem der Ansprüche 1 bis 3, **dadurch gekennzeichnet, dass** die Kompensationseinrichtung (24) zwischen jeden DSLAM Kontakt (15) der Kontaktfedern des Teilnehmers und jeden VOICE Port (19) der jeweiligen xDSL-Spüttereinrichtung mindestens eine Induktivität (25, 26) schaltet.

5. Verteilereinrichtung nach einem der Ansprüche 1 bis 4, **dadurch gekennzeichnet, dass** dann, wenn ein Stecker (23) zwischen die Kontaktfedern eines Teilnehmers einführbart ist, für den jeweiligen Teilnehmer ein VOICE-OVER-IP Betrieb bzw. ein xDSL-PUR Betrieb bereitgestellt ist, wobei dann niederfrequente Sprachdaten-Signale als Teil hochfrequenter Rechnerdaten-Signale über einen die DSLAM Ports (18) umfassenden Signalpfad der jeweiligen xDSL-Splittereinrichtung (14) zu den LINE Ports (20) derselben leitbar sind, wohingegen einen Frittstrom und/oder ein TAM-Prüfsignal des Teilnehmers über einen die VOICE Ports (19) umfassenden Signalpfad der jeweiligen xDSL-Splittereinrichtung (14) zu den LINE Ports (20) derselben leitbar sind

6. Verteilereinrichtung nach einem der Ansprüche 1 bis 5, **dadurch gekennzeichnet, dass** die xDSL-Splittereinrichtungen (14) ausgehend von einer Rückseite des jeweiligen Funktionselements und der oder jeder Stecker (23) ausgehend von einer Vorderseite des jeweiligen Funktionselements mit den Kontaktfedern des oder jedes Teilnehmers kontaktiert sind.

7. Stecker für eine Verteilereinrichtung einer Telekommunikationsanlage mit mindestens einem Funktionselement, wobei jedes Funktionselement der Telekommunikationsanlage für mehrere Teilnehmer jeweils mehrere Kontaktfedern aufweist, die an einer Vorderseite des jeweiligen Funktionselements als IDC-Kontakte ausgebildete Anschlusselemente ausbilden, wobei die Kontaktfedern für jeden Teilnehmer zumindest DSLAM Kontakte, an die der Übertragung hochfrequenter Rechnerdaten-Signale dienende DSLAM Datensignalleitungen anschließbar sind, und VOICE Kontakte, an die der Übertragung niederfrequenter Sprachdaten-Signale dienende VOICE Datensignalleitungen anschließbar sind, und LINE Kontake, an die der Übertragung kombinierter Sprachdaten-/Rechnerdaten-Signale dienende LINE Datensignalleitungen anschließbar sind, ausbilden, wobei mit den Kontaktfedern jedes Teilnehmers jeweils eine xDSL-Splittereinrichtung kontaktiert ist, sodass die Kontaktfedern, welche die DSLAM Kontakte bereitstellen, mit DSLAM Ports der xDSL-Splittereinrichtung des jeweiligen Teilnehmers, die Kontaktfedern, welche die VOICE Kontakte bereitstellen, mit VOICE Ports der xDSL-Splittereinrichtung des jeweiligen Teilnehmers und die Kontaktfedern, welche die LINE Kontakte bereitstellen, mit LINE Ports der xDSL-Splittereinrichtung des jeweiligen Teilnehmers elektrisch leitend verbunden sind, sodass einerseits kombinierte Sprachdaten-/Rechnerdaten-Signale in Sprachdaten-Signale und Rechnerdaten-Signale auftrennbar und andererseits Sprachdaten-Signale und Rechnerdaten-Signate zu einem kombinierten Sprachdaten-/Rechnerdaten-Signal zusammenführbar sind, **dadurch gekennzeichnet, dass** derselbe dann, wenn derselbe zwischen die Kontaktfedern eine Teilnehmers eingeführt ist, die VOICE Kontakte (16) der Kontaktfedern des Teilnehmers von den VOICE Ports (19) der jeweiligen xDSL-Splittereinrichtung (14) trennt und die DSLAM Kontakte (15) der Kontaktfedern des Teilnehmers mit den VOICE Ports (19) der jeweiligen xDSL-Splittereinrichtung unter Zwischenschaltung einer in den Stecker (23) integrierten und als Tiefpassfitter wirkenden Kompensationseinrichtung (24), die für Signale mit einer Frequenz oberhalb einer Grenzfrequenz sperrt bzw. undurchlässig ist, elektrisch leitend verbindet.

## Claims

1. Distribution device for a telecommunications system, having at least one functional element, with each functional element in each case having a plurality of contact springs for a plurality of subscribers, which are in the form of connecting elements which are in the form of IDC contacts on a front face of the respective functional element, with the contact springs for each subscriber being in the form of at least DSLAM contacts, to which DSLAM data signal lines which are used for the transmission of radio-frequency computer data signals can be connected, VOICE contacts, to which VOICE data signal lines which are used for the transmission of audio-frequency voice data signals can be connected, and LINE contacts, to which LINE data signal lines which are used for the transmission of combined voice data/computer data signals can be connected, with in each case one xDSL splitter device making contact with the contact springs of each subscriber, such that the contact springs which provide the DSLAM contacts are electrically conductively connected to DSLAM ports of the xDSL splitter device of the respective subscriber, the contact springs which provide the VOICE contacts are electrically conductively connected to VOICE ports of the xDSL splitter device of the respective subscriber, and the contact springs which provide the LINE contacts are electrically conductively connected to LINE ports of the xDSL splitter device of the respective subscriber, such that, on the one hand, combined voice data/computer data signals can be separated into voice data signals and computer data signals and, on the other hand, voice data signals and computer data signals can be combined to form a combined voice data/computer data signal, **characterized by** at least one plug (23) which can be inserted between the contact springs of a subscriber and disconnects the VOICE contacts (16) of the contact springs of the subscriber from the VOICE ports (19) of the respective xDSL splitter device (14) when the same is inserted between the contact springs of a subscriber, and electrically conductively connects the DSLAM contacts (15) of the contact springs of the subscriber to the VOICE ports (19) of the respective xDSL splitter device with the interposition of a compensation device (24), which is integrated in the plug (23), acts as a low-pass filter and blocks or inhibits signals at a frequency above a cut-off frequency.

2. Distribution device according to Claim 1, **characterized in that** the compensation device (24) comprises at least two inductances (25, 26).

3. Distribution device according to Claim 1 or 2, **characterized in that** the compensation device (24) comprises at least two magnetically coupled inductances (25, 26).

4. Distribution device according to one of Claims 1 to 3, **characterized in that** the compensation device (24) connects at least one inductance (25, 26) between each DSLAM contact (15) of the contact springs of the subscriber and each VOICE port (19) of the respective xDSL splitter device.

5. Distribution device according to one of Claims 1 to 4, **characterized in that**, when a plug (23) can be inserted between the contact springs of a subscriber, VOICE-OVER-IP operation and/or xDSL-PUR operation are/is provided for the respective subscriber, in which case audio-frequency voice data signals can be passed as part of the radio-frequency computer data signals via a signal path, which comprises the DSLAM ports (18) of the respective xDSL splitter device (14) to the LINE ports (20) thereof, while in contrast a fritting current and/or a TAM test signal of the subscriber can be passed via a signal path, which comprises the VOICE ports (19), of the respective xDSL splitter device (14) to the LINE ports (20) thereof.

6. Distribution device according to one of Claims 1 to 5, **characterized in that** the xDSL splitter devices (14) make contact with the contact springs of the or each subscriber, starting from a rear face of the respective functional element, and the or each plug (23) makes contact with the contact springs of the or each subscriber, starting from a front face of the respective functional element.

7. Plug for a distribution device of a telecommunications system, having at least one functional element, with each functional element of the telecommunications system in each case having a plurality of contact springs for a plurality of subscribers, which are in the form of connecting elements which are in the form of IDC contacts on a front face of the respective functional element, with the contact springs for each subscriber being in the form of at least DSLAM contacts, to which DSLAM data signal lines which are used for the transmission of radio-frequency computer data signals can be connected, VOICE contacts, to which VOICE data signal lines which are used for the transmission of audio-frequency voice data signals can be connected, and LINE contacts, to which LINE data signal lines which are used for the transmission of combined voice data/computer data signals can be connected, with in each case one xDSL splitter device making contact with the contact springs of each subscriber, such that the contact springs which provide the DSLAM contacts are electrically conductively connected to DSLAM ports of the xDSL splitter device of the respective subscriber, the contact springs which provide the VOICE contacts are electrically conductively connected to VOICE ports of the xDSL splitter device of the respective subscriber, and the contact springs which provide the LINE contacts are electrically conductively connected to LINE ports of the xDSL splitter device of the respective subscriber, such that, on the one hand, combined voice data/computer data signals can be separated into voice data signals and computer data signals and, on the other hand, voice data signals and computer data signals can be combined to form a combined voice data/computer data signal, **characterized in that**, when said plug is inserted between the contact springs of a subscriber, it disconnects the VOICE contacts (16) of the contact springs of the subscriber from the VOICE ports (19) of the respective xDSL splitter device (14) and electrically conductively connects the DSLAM contacts (15) of the contact springs of the subscriber to the VOICE ports (19) of the respective xDSL splitter device with the interposition of a compensation device (24), which is integrated in the plug (23), acts as a low-pass filter and blocks or inhibits signals at a frequency above a cut-off frequency.

## Revendications

1. Dispositif répartiteur d'un équipement de télécommunication comprenant au moins un élément fonctionnel, chaque élément fonctionnel présentant à chaque fois plusieurs ressorts de contact pour plusieurs abonnés, lesquels ressorts forment sur un côté avant de l'élément fonctionnel correspondant des éléments de raccordement réalisés sous la forme de contacts IDC, les ressorts de contact pour chaque abonné formant au moins des contacts DSLAM, auxquels peuvent être raccordées des lignes de signal de données DSLAM servant à la transmission de signaux de données informatiques à haute fréquence, et des contacts VOICE, auxquels peuvent être raccordées des lignes de signal de données VOICE servant à la transmission de signaux de données vocales à basse fréquence, et des contacts LINE, auxquels peuvent être raccordées des lignes de signal de données LINE servant à la transmission de signaux combinés de données vocales / données informatiques, un dispositif séparateur xDSL étant à chaque fois en contact avec les ressorts de contact de chaque abonné, de sorte que les ressorts de contact qui mettent à disposition les contacts DSLAM soient reliés électriquement avec les ports DSLAM du dispositif séparateur xDSL de l'abonné correspondant, les ressorts de contact qui mettent à disposition les contacts VOICE avec les ports VOICE du dispositif séparateur xDSL de l'abonné correspondant et les ressorts de contact qui mettent à disposition les contacts LINE avec les ports LINE du dispositif séparateur xDSL de l'abonné correspondant, de sorte que d'une part, des signaux combinés de données vocales / données informatiques puissent être séparés en signaux de données vocales et en signaux de données informatiques et, d'autre part, des signaux de données vocales et des signaux de données informatiques puissent être rassemblés en un signal combiné de données vocales / données informatiques, **caractérisé par** au moins une fiche (23) qui peut être insérée entre les ressorts de contact d'un abonné, laquelle, lorsqu'elle est insérée entre les ressorts de contact d'un abonné, sépare les contacts VOICE (16) des ressorts de contact de l'abonné des ports VOICE (19) du dispositif séparateur xDSL (14) correspondant et relie électriquement les contacts DSLAM (15) des ressorts de contact de l'abonné avec les ports VOICE (19) du dispositif séparateur xDSL correspondant en interconnectant un dispositif de compensation (24) intégré dans la fiche (23) et faisant office de filtre passe-bas, lequel bloque ou ne laisse pas passer les signaux ayant une fréquence supérieure à une fréquence limite.

2. Dispositif répartiteur selon la revendication 1, **caractérisé en ce que** le dispositif de compensation (24) comprend au moins deux inductances (25, 26).

3. Dispositif répartiteur selon la revendication 1 ou 2, **caractérisé en ce que** le dispositif de compensation (24) comprend au moins deux inductances (25, 26) couplées magnétiquement.

4. Dispositif répartiteur selon l'une des revendications 1 à 3, **caractérisé en ce que** le dispositif de compensation (24) connecte au moins une inductance (25, 26) entre chaque contact DSLAM (15) des ressorts de contact de l'abonné et chaque port VOICE (19) du dispositif séparateur xDSL correspondant.

5. Dispositif répartiteur selon l'une des revendications 1 à 4, **caractérisé en ce que** lorsqu'une fiche (23) peut être insérée entre les ressorts de contact d'un abonné, un mode de fonctionnement VOICE-OVER-IP ou xDSL-PUR est alors mis à disposition de l'abonné concerné, des signaux de données vocales à basse fréquence faisant partie de signaux de données informatiques à haute fréquence peuvent alors être acheminées par le biais d'un trajet de signal incluant les ports DSLAM (18) du dispositif séparateur xDSL (14) correspondant vers les ports LINE (20) de celui-ci, alors qu'un courant cohérent et/ou un signal de contrôle TAM de l'abonné peut par contre être acheminé par le biais d'un trajet de signal incluant les ports VOICE (19) du dispositif séparateur xDSL (14) correspondant vers les ports LINE (20) de celui-ci.

6. Dispositif répartiteur selon l'une des revendications 1 à 5, **caractérisé en ce que** les dispositifs séparateurs xDSL (14) sont mis en contact avec les ressorts de contact du ou de chaque abonné en partant d'un côté arrière de l'élément fonctionnel correspondant et la ou chaque fiche (23) sont mises en contact avec les ressorts de contact du ou de chaque abonné en partant du côté avant de l'élément fonctionnel correspondant.

7. Fiche pour un dispositif répartiteur d'un équipement de télécommunication comprenant au moins un élément fonctionnel, chaque élément fonctionnel de l'équipement de télécommunication présentant à chaque fois plusieurs ressorts de contact pour plusieurs abonnés, lesquels ressorts forment sur un côté avant de l'élément fonctionnel correspondant des éléments de raccordement réalisés sous la forme de contacts IDC, les ressorts de contact pour chaque abonné formant au moins des contacts DSLAM, auxquels peuvent être raccordées des lignes de signal de données DSLAM servant à la transmission de signaux de données informatiques à haute fréquence, et des contacts VOICE, auxquels peuvent être raccordées des lignes de signal de données VOICE servant à la transmission de signaux de données vocales à basse fréquence, et des contacts LINE, auxquels peuvent être raccordées des lignes de signal de données LINE servant à la transmission de signaux combinés de données vocales / données informatiques, un dispositif séparateur xDSL étant à chaque fois en contact avec les ressorts de contact de chaque abonné, de sorte que les ressorts de contact qui mettent à disposition les contacts DSLAM soient reliés électriquement avec les ports DSLAM du dispositif séparateur xDSL de l'abonné correspondant, les ressorts de contact qui mettent à disposition les contacts VOICE avec les ports VOICE du dispositif séparateur xDSL de l'abonné correspondant et les ressorts de contact qui mettent à disposition les contacts LINE avec les ports LINE du dispositif séparateur xDSL de l'abonné correspondant, de sorte que d'une part, des signaux combinés de données vocales / données informatiques puissent être séparés en signaux de données vocales et en signaux de données informatiques et, d'autre part, des signaux de données vocales et des signaux de données informatiques puissent être rassemblés en un signal combiné de données vocales / données informatiques, **caractérisée en ce que** celle-ci, lorsqu'elle est insérée entre les ressorts de contact d'un abonné, sépare les contacts VOICE (16) des ressorts de contact de l'abonné des ports VOICE (19) du dispositif séparateur xDSL (14) correspondant et relie électriquement les contacts DSLAM (15) des ressorts de contact de l'abonné avec les ports VOICE (19) du dispositif séparateur xDSL correspondant en interconnectant un dispositif de compensation (24) intégré dans la fiche (23) et faisant office de filtre passe-bas, lequel bloque ou ne laisse pas passer les signaux ayant une fréquence supérieure à une fréquence limite.
